# FASCICULE DE BREVET EUROPEEN

(11) **EP 0 902 997 B1**
(45) Date de publication et mention de la délivrance du brevet: **12.09.2001**
(21) Numéro de dépôt: 97926066.8
(22) Date de dépôt: 02.06.1997
(51) Int. Cl.: H02G 15/007, H02G 15/117, H02G 15/013

(54) **DISPOSITIF POUR LE MONTAGE D'AU MOINS UN CABLE DANS UN DISQUE DESTINE A ETRE POSITIONNE DANS UN MANCHON DE PROTECTION D'UN RACCORDEMENT DE CABLES**
VORRICHTUNG ZUM MONTIEREN WENIGSTENS EINES KABELS IN EINE SCHEIBE,WELCHE ZUM POSITIONIEREN IN EINE SCHUTZMUFFE EINER KABELVERBINDUNG BESTIMMT IST
DEVICE FOR MOUNTING AT LEAST ONE CABLE IN A DISC TO BE LOCATED IN A CABLE CONNECTION PROTECTION SLEEVE

(30) Priorité: 05.06.1996 FR 9606911
(43) Date de publication de la demande: 24.03.1999
(73) Titulaire: POUYET S.A., 94207 Ivry sur Seine (FR)
(72) Inventeur: JUHEL, Alain, F-44480 Donges (FR); PERDRIAU, Olivier, F-44100 Nantes (FR)
(74) Mandataire: Wind, Jacques
(86) Numéro de dépôt international: FR9700950
(87) Numéro de publication internationale: WO9747063

(56) Documents cités:
- EP-A- 0 316 911
- DE-A- 4 142 586
- DE-C- 4 429 658
- GB-A- 191 228 094
- US-A- 4 704 499

## Description

La présente invention concerne d'une manière générale un manchon de protection utilisé pour isoler de l'environnement les extrémités raccordées de câbles, par exemple des câbles d'un réseau de communication.

De tels manchons sont usuellement réalisés en matière plastique et permettent de protéger le raccordement des chocs mécaniques et de la corrosion. Ils comportent de manière connue en soi deux disques disposés respectivement autour du ou des câbles entrant et du ou des câbles sortant et une enveloppe globalement cylindrique positionnée autour desdits disques pour fermer de manière étanche l'espace compris entre ces disques, dans lequel est réalisé le raccordement des câbles. L'enveloppe est usuellement constituée soit de deux coquilles fixées l'une sur l'autre par leurs bords longitudinaux, soit d'un tube fendu longitudinalement.

La présente invention concerne plus particulièrement un dispositif pour le montage du ou des câbles entrant ou sortant dudit manchon dans les disques.

Bien que les disques puissent être formés en une seule pièce présentant des ouvertures de passage de câble à travers lesquelles sont enfilés les câbles, les disques usuellement mis en oeuvre sont conçus en plusieurs éléments afin de permettre leur positionnement et leur fixation de part et d'autre du ou des câbles sans sectionner lesdits câbles.

Les dispositifs connus présentent le plus souvent un disque en deux éléments pour le passage de un ou deux câbles, ceux-ci étant alors positionnés dans le plan de joint des deux éléments correspondant à un diamètre du disque. Lorsque trois ou quatre câbles doivent être maintenus, le disque est séparé en trois éléments, par exemple suivant deux plans de joint parallèles à un diamètre.

On a constaté qu'un problème important se posant dans la mise en oeuvre des manchons de protection est celui de l'amarrage des câbles. Il faut que cet amarrage soit tel que les câbles ne puissent être amenés à coulisser dans les disques lorsqu'ils sont soumis à une traction externe. Il est également utile de contrôler la direction suivant laquelle les câbles entrent dans les disques et d'éviter la flexion ou la torsion du câble au niveau de son entrée dans le disque.

En effet, lorsque les câbles sont amenés à coulisser par rapport aux disques ou à ne plus être disposés correctement par rapport à ceux-ci sous l'effet d'une torsion ou d'une flexion, l'étanchéité de leur passage à travers le disque risque d'être détruite. De plus, lors du coulissement d'un câble, les épissures de raccordement réalisées sur ce câble peuvent être endommagées.

Les dispositions proposées à l'heure actuelle pour réaliser l'amarrage des câbles sur le manchon ne donnent pas entièrement satisfaction car elles évitent le coulissement des câbles dans les disques mais n'empêchent pas d'imprimer une torsion ou une flexion au câble dans sa zone d'entrée dans le disque.

C'est par exemple le cas du dispositif proposé par les brevets US-4.538.021 et US-4.558.174 dans lequel les disques présentent un prolongement tubulaire dirigé vers l'espace intérieur du manchon et portent des étriers à portion dentée qui sont serrés sur le câble par un anneau de serrage.

On connaît également d'après le EP-0.316.911 un dispositif pour le montage d'un câble dans un disque. Le disque est constitué de deux éléments et est destiné à être positionné dans un manchon de protection d'un raccordement de câble. Le disque porte en outre un moyen d'amarrage de câble, sous la forme d'éléments de serrage, qui est maintenu fixe par rapport audit disque par des moyens de fixation. Ce moyen d'amarrage du câble est séparé des moyens assurant l'étanchéité du manchon et est positionné derrière le disque, à l'intérieur du manchon. Les moyens d'étanchéité, sous la forme d'une bande enroulée, sont disposés au niveau du disque.

L'invention se propose de résoudre ce problème en fournissant un dispositif assurant un amarrage de bonne qualité des câbles entrant et sortant du manchon.

A cet effet, un dispositif pour le montage d'au moins un câble dans un disque constitué d'au moins deux éléments, est destiné à être positionné dans un manchon de protection d'un raccordement de câbles, ledit disque portant au moins un moyens d'amarrage de câble maintenu fixe par rapport audit disque par des moyens de fixation.

Conformément à l'invention, le dispositif est caractérisé en ce que ledit moyen d'amarrage est porté sur la face avant dudit disque destinée à être tournée vers l'extérieur du manchon, et en ce que ledit moyen d'amarrage comporte une bride d'amarrage enfermée dans un logement formé sur la face avant du disque.

Le dispositif selon l'invention est encore remarquable en ce que :
- le moyen d'amarrage comporte une bride d'amarrage réalisée en plusieurs parties, chaque partie de bride d'amarrage étant fixée au disque en étant moulée en une seule pièce avec un élément du disque,
- le moyen d'amarrage comporte une bride d'amarrage enfermée dans un logement formé sur la face avant du disque,
- lorsque le disque est formé de deux éléments chaque élément comporte une cuvette portée par sa face avant,
- lorsque le disque est formé de trois éléments, le logement destiné au positionnement du moyen d'amarrage est formé de deux cuvettes respectivement sur chaque élément de bord et de deux cuvettes formées sur l'élément intermédiaire,
- la cuvette est globalement parallélépipédique et présente vers l'avant au moins une ouverture, chaque ouverture étant alignée axialement avec chaque passage de câble présenté par le disque,
- le logement est formé par des parois venues de moulage avec les éléments de disque,
- les disques sont positionnés dans l'enveloppe par la coopération de deux nervures parallèles séparées par une creusure de la paroi périphérique du disque avec une nervure formée sur la face interne de l'enveloppe, la creusure étant interrompue dans une zone positionnée dans une interruption de la nervure portée par la face interne de l'enveloppe,
- la bride d'amarrage de câble est constituée de deux moitiés destinées à être disposées et fixées l'une sur l'autre de part et d'autre 'du ou des câbles à amarrer, chaque moitié de bride présentant une zone centrale, d'encombrement globalement parallélépipèdique et comportant au moins un passage semi-cylindriques pour le passage du ou des câbles à amarrer, et deux zones d'extrémité traversées par des ouvertures destinées au passage des moyens de fixation,
- la paroi interne du passage porte au moins une nervure dépassante,
- le moyen d'amarrage comporte des bagues d'amarrage empilables destinées à être positionnées dans la bride d'amarrage,
- des moyens de positionnement sont formés sur lesdites bagues d'amarrage de manière à faciliter leur empilage et à éviter leur glissement relatif les unes par rapport aux autres,
- lesdits moyens de positionnement comportent des rainures que porte la surface externe des bagues, et des nervures portées par la surface interne desdites bagues,
- lesdits moyens de positionnement comportent un téton adapté à être positionné dans une ouverture, le téton et l'ouverture étant disposés dans la zone supérieure de la bague.

L'invention sera mieux comprise grâce à la description qui va suivre donnée à titre d'exemple non limitatif en référence aux dessins annexés dans lesquels :
- la figure 1 est une vue de face d'un élément d'un disque en deux parties permettant le passage d'un câble,
- la figure 2a est une vue de dessous de l'élément représenté à la figure 1 et la figure 2b est une vue agrandie du détail II,
- la figure 3 est une vue de dessus de l'élément de disque représenté à la figure 1,
- la figure 4a est une vue suivant la coupe IV-IV de la figure 1 et la figure 4b est une vue agrandie du détail IV,
- les figures 5, 6 et 7 représentent un élément d'un disque en deux parties permettant le passage de deux câbles, respectivement en vue de face, de dessous et de côté,
- les figures 8, 9 et 10 représentent un élément de bord d'un disque en trois parties permettant le passage de quatre câbles, respectivement en vue de face, de dessous et de côté,
- la figure 11 représente un élément intermédiaire d'un disque en trois parties permettant le passage de quatre câbles en vue de dessus,
- la figure 12 est une vue suivant la coupe XII-XII de la figure 11,
- la figure 13 est une vue suivant la coupe XIII-XIII de la figure 11,
- la figure 14 est une vue de dessus d'une moitié d'une bride d'amarrage en deux parties pour un câble avec une vue agrandie du détail XIV,
- la figure 15 est une vue de dessous d'une moitié d'une bride d'amarrage en deux parties pour un câble avec une vue agrandie du détail XV,
- la figure 16 est une vue de face d'une moitié d'une bride d'amarrage en deux parties pour deux câbles,
- les figures 17, 18 et 19 sont des vues respectivement de face, de dessous avec agrandissement des détails A et B, et de dessus avec agrandissement du détail XIX, d'une moitié d'une bague d'amarrage en deux parties,
- la figure 20 est une vue en perspective partiellement éclatée d'un manchon portant deux disques réalisés chacun suivant une variante de réalisation de l'invention.

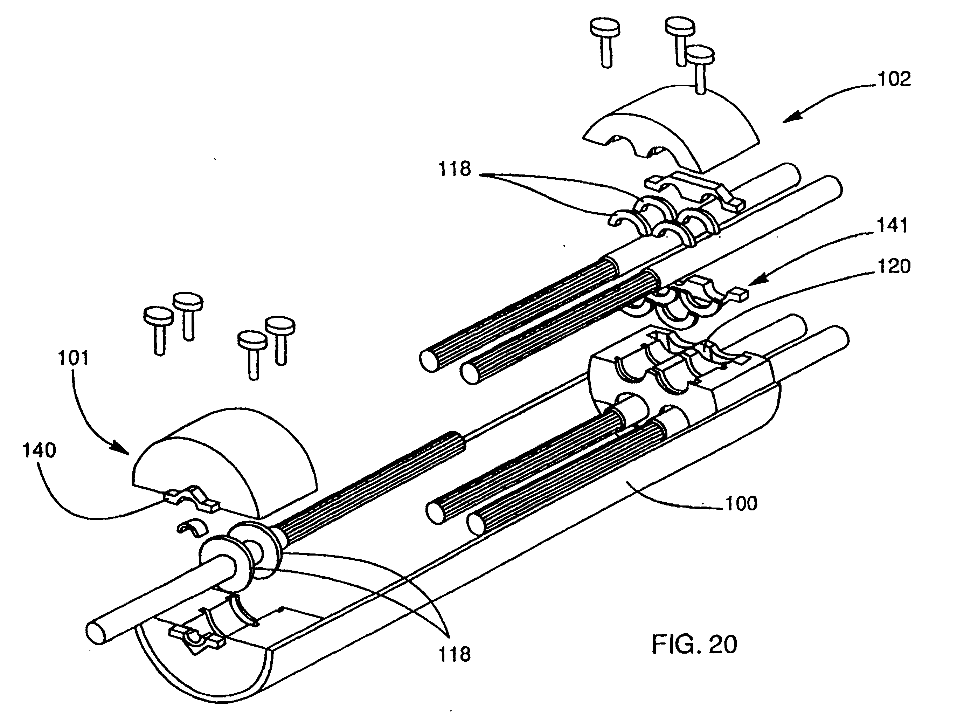

Comme représenté schématiquement à la figure 20, un manchon de protection comporte de manière connue en soi deux disques 101, 102, disposés respectivement autour du ou des câbles entrant et du ou des câbles sortant et une enveloppe 100 globalement cylindrique positionnée autour desdits disques pour fermer de manière étanche l'espace compris entre ces disques, une seule moitié de ladite enveloppe 100 étant représentée.

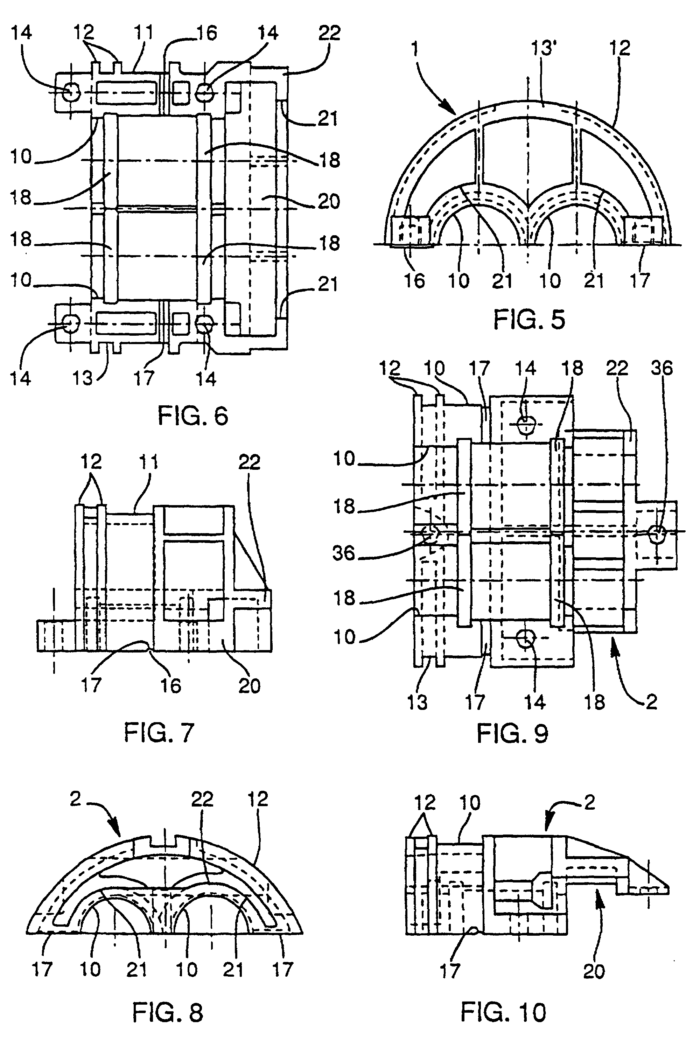

Dans les exemples de réalisation représentés au dessin, les disques sont conçus en deux éléments lorsqu'ils sont destinés au maintien de un ou deux câbles entrant ou sortant d'un manchon de protection, et en trois éléments lorsqu'ils sont destinés au maintien de plus de deux câbles, par exemple quatre aux figures 5 à 10.

Dans la présente description, la face avant d'un objet est la face dirigée vers l'extérieur du manchon lorsque cet objet est monté dans un manchon.

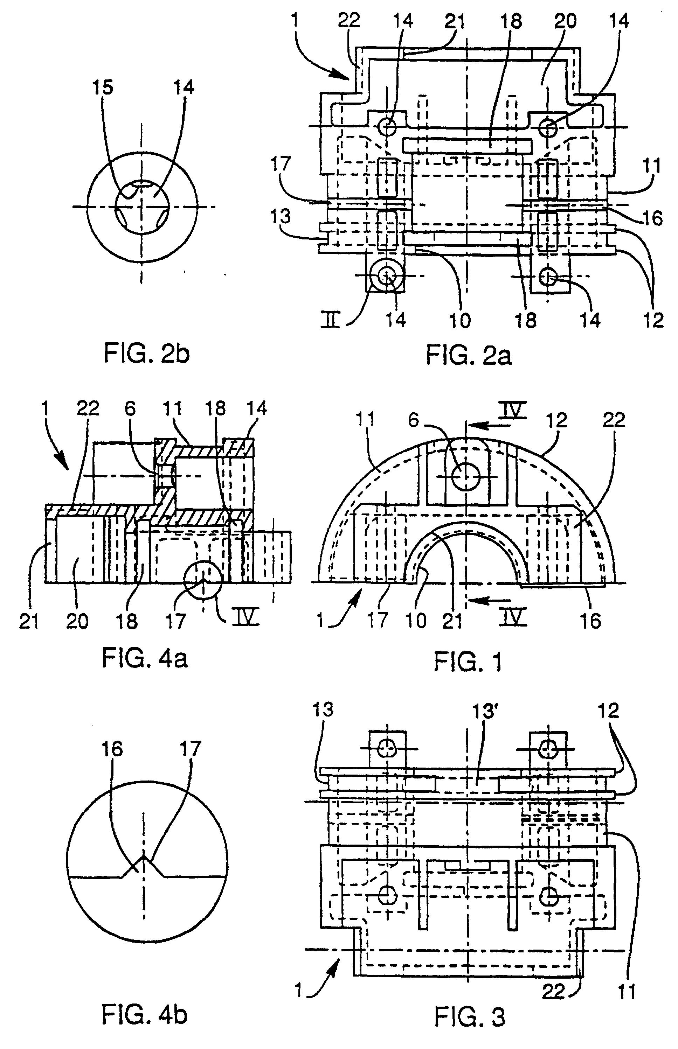

Comme visible aux figures 1 et 5, et de manière connue en soi, un élément 1 d'un disque réalisé en deux éléments présente globalement la forme d'un demi-cylindre et comporte un nombre de passages demi-cylindriques internes 10 égale au nombre des câbles qui doivent être maintenus en position dans le disque.

De manière connue en soi, chaque passage demi-cylindrique 10 comporte deux logements annulaires 18 disposés à distance l'un de l'autre.

Ces logements 18 sont destinés au positionnement de rondelles d'étanchéité 118, visibles à la figure 20, disposées de part et d'autre d'un moyen d'étanchéité entourant le câble, constitué par exemple par un ruban enroulé sur le câble ou par un gel d'étanchéité.

La paroi périphérique qui borde ledit élément est d'un diamètre tel qu'il puisse être appliqué au moyen d'un joint d'étanchéité positionné dans la rainure 11 contre la paroi interne de l'enveloppe de manchon non représentée au dessin.

Ladite paroi périphérique porte deux nervures parallèles 12 séparées par une creusure 13 de manière à permettre le positionnement longitudinal du disque dans l'enveloppe. Lors de la fermeture du manchon, lesdites nervures 12 sont disposées de part et d'autre d'une nervure formée sur la face interne de l'enveloppe afin que celle-ci pénètre dans la creusure 13. Cette disposition permet d'éviter tout déplacement longitudinal des disques dans l'enveloppe.

Comme représenté à la figure 3, la creusure 13 est interrompue dans une zone 13'. La nervure portée par la face interne de l'enveloppe est elle aussi interrompue pour permettre le positionnement de cette zone 13'. L'on obtient ainsi, circonférentiellement, une succession de portions de nervure de l'enveloppe et de zone 13' sans creusure du disque qui permet un blocage en rotation dudit disque par rapport à l'enveloppe.

Suivant une variante de réalisation non représentée au dessin, le blocage en rotation du disque dans l'enveloppe peut être rendu encore plus efficace par la formation de doigts dépassant de la face interne de l'enveloppe et destinés à être insérés dans des perçages du disque.

Lors du montage, deux éléments de disque sont positionnées de part et d'autre du ou des câbles, en appui l'un sur l'autre par leur plan diamétral et sont fixés l'un à l'autre par des moyens de fixation positionnés dans les ouvertures 14. Dans les exemples montrés au dessin, il est prévu d'utiliser des vis, non représentées, s'engageant avec des écrous également non représentés. Des ergots 15 visibles sur la figures 2b permettent d'assurer un maintien des vis afin de les rendre imperdables. Suivant une variante de réalisation non représentée au dessin, des moyens de détrompage sont positionnés dans le plan diamétral de chaque élément pour assurer que le montage du disque est convenablement effectué.

Comme visible aux figures, le plan diamétral de l'élément de disque présente une nervure 16 sur un côté et une rainure 17 sur l'autre côté. Lesdites nervures 16 et rainures 17 sont de section semblable, par exemple celle représentée en agrandissement à la figure 4b, et sont positionnées de manière telle que la nervure 16 de la moitié supérieure pénètre dans la rainure 17 de la moitié inférieure et réciproquement pour la nervure 16 de la moitié inférieure et la rainure 17 de la moitié supérieure.

Ces nervures et rainures sont disposées transversalement sur les faces diamétrales planes des éléments de disque de manière à assurer une liaison entre les moyens d'étanchéités disposés à l'intérieur du disque, autour des câbles, et les moyens d'étanchéité disposés autour du disque, contre l'enveloppe, ce qui permet d'améliorer le montage étanche du manchon. Cette étanchéité peut, de plus, être améliorée par une enduction des faces planes avec un gel d'étanchéité.

Les éléments de disque sont réalisés par moulage de matière plastique. A cet effet, des évidements sont prévus de manière à réduire le volume de matière et à éviter la réalisation de parois trop épaisses. Ces évidements ne seront pas décrits en détail ici.

Suivant l'invention, le disque porte sur sa face avant dirigée vers l'extérieur du manchon un moyen d'amarrage du (ou des) câbles qui le traverse(nt), ledit moyen d'amarrage étant maintenu fixe par rapport au disque.

La figure 20 montre de manière schématique deux variantes de réalisation de l'invention.

Le disque 101, dans lequel est disposé un seul câble, est en deux éléments portant chacun une partie de bride d'amarrage 140. Ces parties de bride d'amarrage sont fixées au disque en étant moulées en une seule pièce avec chaque élément du disque.

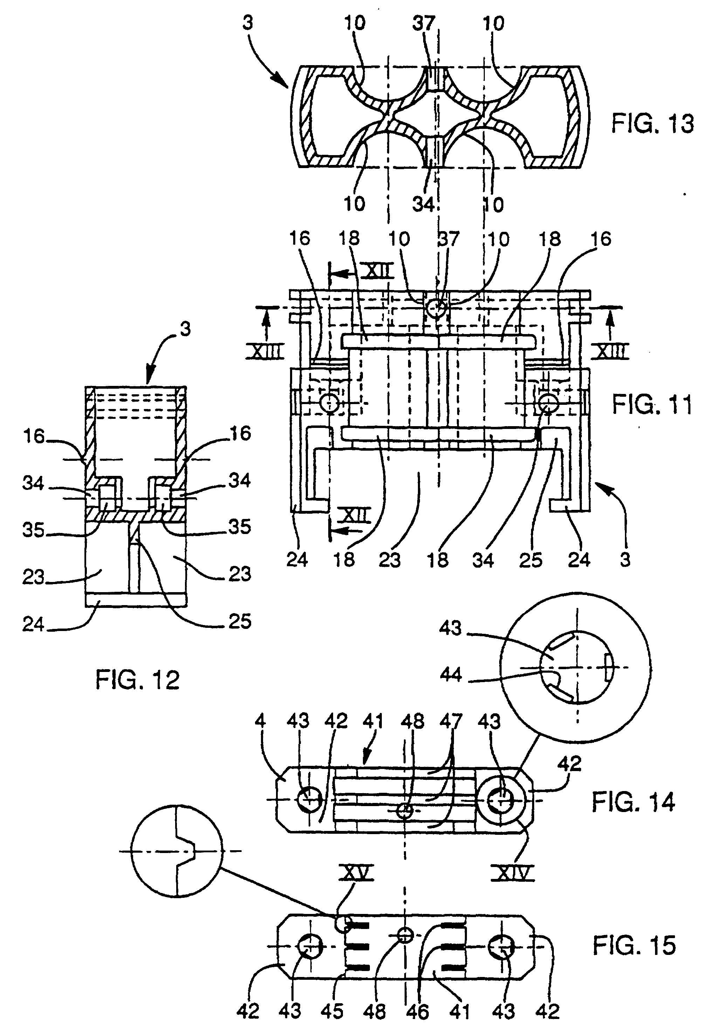

Dans la variante de réalisation représentée pour le disque 102, le moyen d'amarrage 141 est du type de celui qui sera décrit plus loin en référence aux figures 14 à 19, et est positionné dans un logement 120 que présente le disque.

Dans les exemples de réalisation de disques en deux éléments représentés aux figures 1 à 7, chaque élément 1 comporte une cuvette 20 portée par sa face avant.

Cette cuvette 20 est globalement parallélépipèdique et présente vers l'avant une ouverture 21, en demi-cercle dans les exemples de réalisation représentés au dessin, alignée axialement avec chaque passage demi-cylindrique 10 de passage de câble, elle est formée par une paroi 22 venue de moulage avec l'élément 1 de disque.

Le bord ouvert de la cuvette 20 s'étend dans le même plan que la paroi diamétrale plane de l'élément 1. Le logement formé par les deux cuvettes 20 lorsque les éléments de disque sont positionnés l'un sur l'autre est alors un logement fermé.

Les figures 8 à 13 montrent un exemple de réalisation d'un disque en trois éléments tel que le disque 102 de la figure 20, deux éléments de bord représentés aux figures 8 à 10 étant destinés à être positionnés de part et d'autre d'un élément intermédiaire représenté aux figures 11 à 13.

Dans cet exemple de réalisation, deux câbles peuvent être positionnés entre chacun des éléments de bord 2 et l'élément intermédiaire 3. Il pourrait bien entendu être prévu de ne positionner qu'un câble entre un élément de bord et l'élément intermédiaire de manière à disposer deux câbles l'un au-dessus de l'autre ou trois câbles.

De manière à simplifier la description, les objets semblables à ceux des figures précédentes et pour lesquels il n'a été pratiqué qu'une adaptation gardent la même référence.

Les éléments d'un tel disque en trois parties sont conçus en partageant ledit disque suivant deux plans parallèles à un diamètre et disposés de part et d'autre de celui-ci.

Les éléments de bord 2 sont alors des éléments présentant une paroi externe constituée d'une portion cylindrique d'encombrement inférieur à celui d'un demi-cylindre et d'une face plane. Ces éléments de bord ont une hauteur inférieure au rayon du disque.

L'élément intermédiaire 3 présente deux faces planes raccordées par des portions cylindriques.

Lesdits éléments de bord 2 comportent des passages demi-cylindriques 10 ouvrant dans leur face plane et destinés à coopérer avec des passages demi-cylindriques 10 ouvrant dans chaque face plane de l'élément intermédiaire 3.

Dans certaines formes de réalisation, comme représenté au dessin, les passages demi-cylindriques 10 prévus dans une face de l'élément intermédiaire 3 sont de diamètre différent de ceux prévus dans l'autre face, lesdits diamètres étant très proches l'un de l'autre.

Dans ce cas, des éléments de bord 2 différents sont utilisés pour former le disque et des moyens de détrompage sont prévus sur les faces planes en correspondance desdits éléments de bord et de l'élément intermédiaire.

Des éléments de fixation disposés dans les ouvertures 14 assurent la fixation d'un élément de bord 2 à l'élément intermédiaire 3 en coopérant avec des moyens d'arrêt positionnés dans les évidements 35 des ouvertures 34 que présente l'élément intermédiaire en correspondance avec chaque ouverture 14.

Les éléments de bord 2 présentent deux ouvertures 36 disposées respectivement près de leur face avant et près de leur face arrière.

Les moyens de fixation disposés dans ces ouvertures 36 assurent la fixation d'un élément de bord par rapport à l'autre en enserrant l'élément intermédiaire. A cet effet, la vis disposée dans l'ouverture 36 située à l'arrière traverse sans coopération l'ouverture 37 de l'élément intermédiaire, tandis que celle positionnée dans l'ouverture avant 36 s'étend à l'avant du logement créé sur la face avant pour la mise en place des moyens d'amarrage.

Par une telle disposition, il est possible d'intervenir sur les câbles fixés entre un élément de bord et l'élément intermédiaire sans agir sur la fixation des câbles positionnés entre ledit élément intermédiaire et l'autre élément de bord.

Dans cette forme de réalisation, le logement destiné au positionnement du moyen d'amarrage est un logement double constitué de deux cuvettes 20 formées respectivement sur chaque élément de bord 2 par une paroi 22, et de deux cuvettes 23 formées sur l'élément intermédiaire 3 par deux parois en L 24 et une paroi plane 25.

Dans l'exemple de réalisation représenté au dessin, la paroi plane 25 est limitée à une bande de faible encombrement.

Dans les exemples de réalisation représentés au dessin, les moyens d'amarrage sont constitués d'une bride d'amarrage et de bagues.

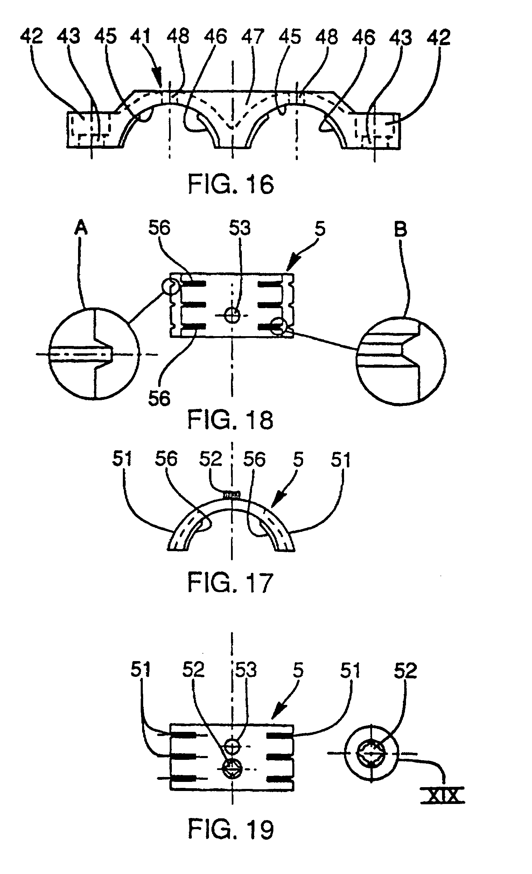

Deux formes de réalisation de la bride d'amarrage de câble sont proposées, l'une pour l'amarrage d'un câble, représentée aux figures 14 et 15, et l'autre pour l'amarrage de deux câbles, représentée à la figure 16.

Les brides d'amarrage de câble sont constituées de deux moitiés 4 disposées. l'une sur l'autre de part et d'autre du ou des câbles à amarrer.

Chaque moitié de bride présente une zone centrale 41 et deux zones d'extrémité 42 traversées par des ouvertures 43 destinées au passage des moyens de fixation retenus par des ergots 44.

La zone centrale 41 est d'encombrement globalement parallélépipèdique et comporte un ou deux passages semi-cylindriques 45 pour le passage du ou des câbles à amarrer.

Comme visible aux figures 15 et 16, la paroi interne des passages 45 porte des nervures dépassantes 46. Plusieurs nervures 46 sont prévues sur la longueur de la moitié de bride. Les brides représentées au dessin comportent trois nervures 46 régulièrement réparties le long du passage 45, ces nervures 46 ne s'étendant pas sur toute la circonférence du passage 45 mais uniquement près de l'ouverture de la moitié de bride.

La face supérieure de la zone centrale est plane et formée par des nervures de raidissement 47 disposées au-dessus des parois tubulaires formant les passages semi-cylindrique 45.

Avant le montage des disques sur les câbles, les deux moitiés de la bride d'amarrage sont fixées l'une à l'autre après avoir été disposées de part et d'autre du ou des câbles à amarrer.

Des bagues d'amarrage sont prévues afin de combler le volume existant autour du câble lorsque celui-ci n'est pas de diamètre suffisant pour remplir le passage semi-cylindrique 45.

Ces bagues représentées aux figures 17 à 19 sont elles aussi réalisées en deux parties 5 semi-cylindriques de manière à pouvoir être disposées de part et d'autre du câble.

Un jeu de plusieurs bagues de diamètres externe et interne adaptés de manière à pouvoir les disposer les unes dans les autres est proposé. Dans ce jeu de bagues, la bague la plus grande a un diamètre externe égal au diamètre interne des brides, puis chaque bague a un diamètre externe égal au diamètre interne de la bague précédente dans l'ordre décroissant des dimensions. Lors du montage, l'utilisateur positionne autour du câble qu'il doit connecter les bagues appropriées jusqu'à ce que la dernière bague soit adaptée au passage interne 45 de la bride d'amarrage.

Des moyens de positionnement sont formés sur lesdites bagues de manière à faciliter leur empilage et à éviter leur glissement relatif les unes par rapport aux autres.

Ces moyens de positionnement comportent des rainures 51 que porte la surface externe des bagues, et des nervures 56 portées par la surface interne desdites bagues.

Les rainures 51 de la bague la plus grande sont adaptées à être positionnées sur les nervures 46 de la bride. Ces rainures sont réparties sur la surface de la bague de la même manière que les nervures 46 de la bride et sont de section adaptées pour se positionner sur lesdites nervures 46.

Les nervures 56 sont des nervures semblables aux nervures 46 de la bride, réparties de la même manière que celles-ci.

Les rainures 51 et nervures 56 de chaque bague sont adaptées pour se positionner respectivement sur les nervures de la bague de plus grande dimension et dans les rainures de la bague de plus petite dimension.

Les moyens de positionnement comportent de plus un téton 52 adapté à être positionné dans une ouverture 53. Dans l'exemple représenté au dessin, le téton 52 et l'ouverture 53 sont disposés dans la zone supérieure de la bague.

Comme visible aux figures 14 à 16, les brides présentent une ouverture 48 semblable aux ouvertures 53 des bagues de manière à permettre le positionnement du téton 52 de la bague la plus grande.

Lors de l'empilement des bagues sur le câble, celles-ci sont disposées tête-bêche afin de positionner les tétons dans les ouvertures.

Lors de la réalisation d'une connexion, l'utilisateur dispose tout d'abord les bagues, si elles sont nécessaires, autour du câble en prenant soin de commencer par une bague de diamètre interne un peu inférieur au diamètre externe du câble. Lorsque l'empilage des bagues est terminé, il positionne les deux moitiés de bride 4 et les fixe l'une à l'autre. Au cours de cette fixation, la bague la plus petite pénètre en partie dans la gaine du câble ce qui assure le maintien en translation dudit câble dans ladite bride.

L'utilisateur positionne ensuite les rondelles d'étanchéité à des distances de la bride spécifiées par le fournisseur, puis dispose autour du câble un enroulement de ruban d'étanchéité lorsqu'il est prévu.

Le câble ainsi préparé est alors positionné dans un élément inférieur de disque choisi en fonction du nombre de câbles à raccorder. Les rondelles d'étanchéité sont positionnées dans les logements 18 tandis que la bride d'amarrage est disposée dans la cuvette 20.

Lorsque le nombre convenable de câbles a été disposé dans l'élément inférieur, celui-ci est coiffé par une moitié supérieure ou par un élément intermédiaire de disque en prenant soin de positionner à nouveau les rondelles d'étanchéité dans les logements 18 et la cuvette 20 ou la cuvette 23 autour de la bride d'étanchéité. Les deux éléments de disques sont alors fixés l'un à l'autre.

La paroi 25 séparant les deux cuvettes 23 d'un élément intermédiaire est d'encombrement suffisant pour être appliquée contre la face supérieure de la bride d'amarrage.

Dans le cas où l'étanchéité du passage de câble est réalisée à l'aide d'un gel, ce gel est injecté par un orifice d'injection après la fixation des éléments de disque.

Lors du montage d'un disque en trois éléments, les étapes précédentes sont à nouveau effectuées avec les câbles et l'élément de bord supérieur, la bride d'amarrage maintenant en place les câbles du niveau supérieur étant posée dans la cuvette 23 disposée au-dessus de la bride d'amarrage maintenant en place les câbles du niveau inférieur.

Par un tel montage pouvant être réalisé de manière simple et rapide, chaque bride d'amarrage est enfermée dans un logement formé sur la face. avant du disque, c'est-à-dire sur la face destinée à être tournée vers l'extérieur du manchon lorsque l'enveloppe est mise en place.

Les dimensions des brides d'amarrage et des logements du disque dans lesquels elles sont positionnées sont telles que lesdites brides sont maintenues fixes à l'encontre de tout mouvement.

Les câbles sont de ce fait maintenus au niveau de leur entrée dans le disque dans une position fixe par rapport audit disque quels que soient les efforts de traction, torsion ou flexion, qui leurs sont appliqués à l'extérieur du manchon.

Une telle disposition permet de ne pas transmettre vers l'intérieur du disque les efforts subis par le câble à l'extérieur du manchon, qu'ils soient de traction, de torsion ou de flexion, et ainsi de ne pas affaiblir l'étanchéité réalisée entre les câbles et le disque.

D'autres formes de réalisation pourraient bien entendu être prévues sans sortir du cadre de la présente invention, tellle que définie par les revendications.

L'invention peut être mise en oeuvre dans les différents manchons de types connus, une ouverture 6 telle que celle représentée à titre d'exemple aux figures 1 et 4a peut être utilisée pour la mise en place d'une valve de pressurisation ou d'une borne de mise à la masse.

## Revendications

1. Dispositif pour le montage d'au moins un câble dans un disque, constitué d'au moins deux éléments, destiné à être positionné dans un manchon de protection d'un raccordement de câbles, ledit disque (102 ; 1,1 ; 2, 3, 2) portant au moins un moyen d'amarrage de câble (141 ; 4, 4) maintenu fixe par rapport audit disque par des moyens de fixation, **caractérisé en ce que** ledit moyen d'amarrage est porté sur la face avant dudit disque destinée à être tournée vers l'extérieur du manchon, et en ce que ledit moyen d'amarrage comporte une bride d'amarrage (141 ; 4, 4) enfermée dans un logement (120 ; 20, 20 ; 20, 23, 20) formé sur la face avant du disque (102 ; 1, 1 ; 2, 3, 2).

2. Dispositif selon la revendication 1, **caractérisé en ce que** lorsque le disque (1, 1) est formé de deux éléments (1) chaque élément (1) comporte une cuvette (20) portée par sa face avant.

3. Dispositif selon la revendication 2, **caractérisé en ce que** lorsque le disque (2, 3, 2) est formé de trois éléments, le logement destiné au positionnement du moyen d'amarrage est formé de deux cuvettes (20) respectivement sur chaque élément de bord (2) et de deux cuvettes (23) formées sur l'élément intermédiaire.

4. Dispositif selon la revendication 2 ou la revendication 3, **caractérisé en ce que** la cuvette (20) est globalement parallélépipèdique et présente vers l'avant au moins une ouverture (21), chaque ouverture (21) étant alignée axialement avec chaque passage de câble (10) présenté par le disque (1, 1).

5. Dispositif selon l'une quelconque des revendications 1 à 4, **caractérisé en ce que** le logement (20, 20 ; 20, 23, 20) est formé par des parois (22, 24, 25) venues de moulages avec les éléments de disque.

6. Dispositif selon l'une quelconque des revendications précédentes, **caractérisé en ce que** les disques sont positionnés dans l'enveloppe par la coopération de deux nervures parallèles (12) séparées par une creusure (13) de la paroi périphérique du disque avec une nervure formée sur la face interne de l'enveloppe, la creusure (13) étant interrompue dans une zone (13') positionnée dans une interruption de la nervure portée par la face interne de l'enveloppe.

7. Dispositif selon l'une quelconque des revendications 1 à 6, **caractérisé en ce que** la bride d'amarrage de câble est constituée de deux moitiés (4) destinées à être disposées et fixées l'une sur l'autre de part et d'autre du ou des câbles à amarrer, chaque moitié de bride (4) présentant une zone centrale (41), d'encombrement globalement parallélépipèdique et comportant au moins un passage semi-cylindrique (45) pour le passage du ou des câbles à amarrer, et deux zones d'extrémité (42) traversées par des ouvertures (43) destinées au passage des moyens de fixation.

8. Dispositif selon la revendication 7, **caractérisé en ce que** la paroi interne du passage (45) porte au moins une nervure dépassante (46).

9. Dispositif selon l'une quelconque des revendications précédentes, **caractérisé en ce que** le moyen d'amarrage des bagues d'amarrage (5, 5) empilables destinées à être positionnées dans la bride d'amarrage.

10. Dispositif selon la revendication 9, **caractérisé en ce que** des moyens de positionnement sont formés sur lesdites bagues d'amarrage de manière à faciliter leur empilage et à éviter leur glissement relatif les unes par rapport aux autres.

11. Dispositif selon la revendication 10, **caractérisé en ce que** lesdits moyens de positionnement comportent des rainures (51) que porte la surface externe des bagues, et des nervures (56) portées par la surface interne desdites bagues.

12. Dispositif selon la revendication 10, **caractérisé en ce que** lesdits moyens de positionnement comportent un téton (52) adapté à être positionné dans une ouverture (53), le téton (52) et l'ouverture (53) étant disposés dans la zone supérieure de la bague.

## Patentansprüche

1. Vorrichtung zur Montage mindestens eines Kabels in einer aus mindestens zwei Elementen bestehenden Scheibe, zur Anordnung einer Kabelverbindung in einer Schutzmuffe, wobei die Scheibe (102; 1, 1; 2, 3, 2) mindestens ein ihr gegenüber durch Befestigungsmittel fixiertes Seilverankerungsmittel (141; 4, 4) trägt, **dadurch gekennzeichnet, daß** das Verankerungsmittel an der der Außenseite der Muffe zugewandten Vorderseite der Scheibe angeordnet ist und einen in einem an der Vorderseite der Scheibe (102; 1, 1; 2, 3, 2) ausgebildeten Ausnehmung (120; 20, 20; 20, 23, 20) aufgenommenen Verankerungsflansch (141; 4, 4) umfaßt.

2. Vorrichtung nach Anspruch 1, **dadurch gekennzeichnet, daß** bei einer aus zwei Elementen (1) bestehenden Scheibe (1, 1) jedes Element (1) eine an seiner Vorderseite angeordnete Wanne (20) aufweist.

3. Vorrichtung nach Anspruch 2, **dadurch gekennzeichnet, daß** bei einer aus drei Elementen bestehenden Scheibe (2, 3, 2) die für die Anordnung des Verankerungsmittels vorgesehene Ausnehmung jeweils an jedem Randelement (2) aus zwei Wannen (20) und aus zwei am Zwischenelement ausgebildeten Wannen (23) besteht.

4. Vorrichtung nach Anspruch 2 oder 3, **dadurch gekennzeichnet, daß** die Wanne (20) insgesamt parallelepipedisch ist und vorne mindestens eine Öffnung (21) aufweist, wobei jede Öffnung (21) axial zu jeder Kabeldurchführung (10) durch die Scheibe (1, 1) ausgerichtet ist.

5. Vorrichtung nach einem der Ansprüche 1 bis 4, **dadurch gekennzeichnet, daß** die Ausnehmung (20, 20; 20, 23, 20) durch Wände (22, 24, 25) begrenzt wird, die durch Gießen mit den Scheibenelementen entstanden sind.

6. Vorrichtung nach einem der vorhergehenden Ansprüche, **dadurch gekennzeichnet, daß** die Scheiben durch das Zusammenwirken von zwei parallelen und durch einen Einsprung (13) der Umfangswand der Scheibe getrennten Rippen (12) mit einer an der Innenseite der Muffe gebildeten Rippe in einem Mantel angeordnet sind, wobei der Einsprung (13) in einem in einer Unterbrechung der an der Innenseite der Muffe angeordneten Rippe befindlichen Bereich (13') unterbrochen ist.

7. Vorrichtung nach einem der Ansprüche 1 bis 6, **dadurch gekennzeichnet, daß** der Kabelverankerungsflansch aus zwei aneinander und beidseits des zu verankernden Kabels zu befestigenden Hälften (4) besteht, wobei jede Flanschhälfte (4) einen insgesamt einen parallelepipedischen Raum einnehmenden Mittelteil (41) aufweist und mindestens einen halbzylindrischen Durchbruch (45) für die Durchführung des oder der zu verankernden Kabel und zwei Endbereiche (42) mit Öffnungen (43) für den Durchtritt der Befestigungsmittel umfaßt.

8. Vorrichtung nach Anspruch 7, **dadurch gekennzeichnet, daß** die Innenwand des Durchbruchs(45) mindestens eine überstehende Rippe (46) aufweist.

9. Vorrichtung nach einem der vorhergehenden Ansprüche, **dadurch gekennzeichnet, daß** das Verankerungsmittel der stapelbaren Verankerungsringe (5,5) für die Anordnung im Verankerungsflansch bestimmt ist.

10. Vorrichtung nach Anspruch 9, **dadurch gekennzeichnet, daß** die Verankerungsringe Positioniermittel haben, um ihre Stapelung zu erleichtern und ihr gegenseitiges Verrutschen zu vermeiden.

11. Vorrichtung nach Anspruch 10, **dadurch gekennzeichnet, daß** die Positioniermittel auf der Außenfläche der Ringe angeordnete Nuten (51) und auf der Innenfläche dieser Ringe angeordnete Rippen (56) aufweisen.

12. Vorrichtung nach Anspruch 10, **dadurch gekennzeichnet, daß** die Positioniermittel einen zur Anordnung in einer Öffnung (53) vorgesehenen Vorsprung (52) umfassen, wobei der Vorsprung (52) und die Öffnung (53) im oberen Bereich des Rings angeordnet sind.

## Claims

1. Device for mounting at least one cable in a disc, constituted by at least two elements, adapted to be positioned in a cable connection protection sleeve, said disc (102; 1, 1; 2, 3, 2) bearing at least one cable-securing means (141; 4, 4) maintained fixed with respect to said disc by fastening means, **characterized in that** said securing means is borne on the front face of said disc adapted to be turned towards the outside of the sleeve, and in that said securing means comprises a securing flange (141; 4, 4) enclosed in a housing (120; 20, 20; 20, 23, 20) formed on the front face of the disc (102; 1, 1; 2, 3, 2).

2. Device according to claim 1, **characterized in that**, when the disc (1, 1) is formed by two elements (1), each element (1) comprises a dish (20) borne by its front face.

3. Device according to claim 2, **characterized in that**, when the disc (2, 3, 2) is formed by three elements, the housing adapted for positioning the securing means is formed by two dishes (20) respectively on each edge element (2) and by two dishes (23) formed on the intermediate element.

4. Device according to claim 2 or claim 3, **characterized in that** the dish (20) is overall parallelepipedic and presents towards the front at least one opening (21), each opening (21) being axially aligned with each cable passage (10) presented by the disc (1, 1).

5. Device according to any one of claims 1 to 4, **characterized in that** the housing (20, 20; 20, 23, 20) is formed by walls (22, 24, 25) integral with the disc elements.

6. Device according to any one of the preceding claims, **characterized in that** the discs are positioned in the envelope by the cooperation of two parallel ribs (12) separated by a hollow (13) in the peripheral wall of the disc with a rib formed on the inner face of the envelope, the hollow (13) being interrupted in a zone (13') positioned in an interruption of the rib borne by the inner face of the envelope.

7. Device according to any one of claims 1 to 6, **characterized in that** the cable-securing flange is constituted by two halves (4) adapted to be disposed and fastened one on the other on either side of the cable or cables to be secured, each flange half (4) presenting a central zone (41), of overall parallelepipedic dimensions and comprising at least one semi-cylindrical passage (45) for the passage of the cable or cables to be secured, and two end zones (42) traversed by openings (43) adapted for the passage of the fastening means.

8. Device according to claim 7, **characterized in that** the inner wall of the passage (45) bears at least one projecting rib (46).

9. Device according to any one of the preceding claims, **characterized in that** the securing means comprises stackable securing rings (5, 5) adapted to be positioned in the securing flange.

10. Device according to claim 9, **characterized in that** positioning means are formed on said securing rings so as to facilitate the stacking thereof and to avoid their relative slide with respect to one another.

11. Device according to claim 10, **characterized in that** said positioning means comprise grooves (51) borne by the outer surface of the rings, and ribs (56) borne by the inner surface of said rings.

12. Device according to claim 10, **characterized in that** said positioning means comprise a stud (52) adapted to be positioned in an opening (53), the stud (52) and the opening (53) being disposed in the upper region of the ring.
